# EUROPÄISCHE PATENTSCHRIFT

(11) **EP 2 819 799 B1**
(45) Veröffentlichungstag und Bekanntmachung des Hinweises auf die Patenterteilung: **12.08.2020**
(21) Anmeldenummer: 13704054.9
(22) Anmeldetag: 06.02.2013
(51) Int. Cl.: B23B 31/117, B23Q 11/10

(54) **SCHRUMPFFUTTER MIT WERKZEUGKÜHLUNG**
SHRINK-FIT CHUCK WITH TOOL COOLING
MANDRIN DE FRETTAGE AVEC REFROIDISSEMENT DE L'OUTIL

(30) Priorität: 29.02.2012 DE 102012101672
(43) Veröffentlichungstag der Anmeldung: 07.01.2015
(60) Teilanmeldung: 20182845.6
(73) Patentinhaber: Haimer GmbH, 86568 Hollenbach-Igenhausen (DE)
(72) Erfinder: HAIMER, Franz, 86568 Igenhausen (DE); HAIMER, Josef, 86568 Igenhausen (DE)
(74) Vertreter: Charrier Rapp & Liebau
(86) Internationale Anmeldenummer: PCT/EP2013/052266
(87) Internationale Veröffentlichungsnummer: WO 2013/127606

(56) Entgegenhaltungen:
- EP-A1- 2 570 213
- EP-A1- 2 666 567
- WO-A1-02/051571
- WO-A1-2010/062850
- DE-A1- 10 244 759
- DE-A1-102010 028 561
- FR-A1- 2 695 341
- US-A- 4 795 292
- US-A1- 2007 077 132
- US-A1- 2010 270 757
- US-B2- 7 134 812

## Beschreibung

Die Erfindung betrifft ein Schrumpffutter mit Werkzeugkühlung nach dem Oberbegriff des Anspruchs 1. Ein derartiges Schrumpffutter ist aus der DE 102 44 759 A1 bekannt.

Aus der WO 2010/022875 A1 sind Schrumpffutter bekannt, bei welchen im vorderen Teil des Schrumpffutters innerhalb der Aufnahmeöffnung ein Stau- und Sammelraum für eine mittels Kühlmittelkanälen zugeführten Kühlflüssigkeit angeordnet sind. Der Stau- und Sammelraum ist durch einen Ringsteg von der freien Stirnseite des Schrumpffutters getrennt, wobei zwischen dem Ringsteg und einem eingespannten Werkzeug ein Ringspalt vorhanden ist. Diese Schrumpffutter sind so konzipiert, dass das über die Kühlmittelkanäle dem Stau- und Sammelraum zugeführte Kühlmittel ausschließlich über den Ringspalt nach vorne zum Werkzeug hin austritt um einen geschlossenen Kühlmittelmantel um das Werkzeug zu bilden. Allerdings wird das Kühlmittel hier im Wesentlichen entlang des Werkzeugschafts geführt und die Möglichkeiten der Strahlführung zum Werkzeug sind beschränkt.

Ein aus der DE 102 44 759 A1 bekanntes Schrumpffutter weist einen Aufnahmekörper mit einer Aufnahmeöffnung für einen Werkzeugschaft, einen im vorderen Bereich der Aufnahmeöffnung angeordneten Stau- und Sammelraum und einen zu dem Stau- und Sammelraum führenden Kühlmittelkanal auf. Der Stau- und Sammelraum wird durch einen am vorderen Ende der Aufnahmeöffnung angeordneten Ringsteg nach vorne begrenzt, wobei der Innendurchmesser des Ringstegs dem Innendurchmesser der Aufnahmeöffnung entspricht. In dem Ringsteg sind Auslassöffnungen für den Austritt eines über den Kühlmittelkanal in den Stau- und Sammelraum geleiteten Kühlmittels nach außen vorgesehen.

Aufgabe der Erfindung ist es, ein Schrumpffutter der eingangs genannten Art zu schaffen, das kostengünstig herstellbar ist und dennoch eine optimale Kühlung der Werkzeuge ermöglicht.

Diese Aufgabe wird durch ein Schrumpffutter mit den Merkmalen des Anspruchs 1 gelöst. Zweckmäßige Weiterbildungen und vorteilhafte Ausführungsformen der Erfindung sind Gegenstand der Unteransprüche.

Bei dem erfindungsgemäßen Schrumpffutter entspricht der Innendurchmesser des den Stau- und Sammelraum nach vorne begrenzenden Ringstegs dem Innendurchmesser der Aufnahmeöffnung, so dass kein Ringspalt zwischen dem Ringsteg und dem Werkzeugschaft besteht. Beim Schrumpfvorgang macht der Ringsteg die Verformung des Aufnahmekörpers mit, so dass ein problemloses Einführen bzw. Entnehmen eines Werkzeugs ermöglicht wird und nach dem Einschrumpfen kein Ringspalt zwischen dem Ringsteg und dem Werkzeugschaft besteht. Dadurch kann ein Kühlmittel auf einfache und effektive Weise ohne Kühlmittelverlust zu den im Ringsteg vorgesehenen Auslassöffnungen geleitet und von dort gezielt an die zu kühlenden Bereiche geführt werden. Idealerweise sollte kein Ringspalt zwischen dem Ringsteg und dem Werkzeugschaft bestehen, so dass die gesamte Kühlflüssigkeit durch die Auslassöffnungen austritt. Falls jedoch durch fertigungsbedingte Toleranzen dennoch ein kleiner Spalt zwischen dem Ringsteg und dem Werkzeugschaft besteht, sollte der Querschnitt des Ringspalts kleiner als 20% des Gesamtquerschnitts der Auslassöffnungen betragen. Der Ringsteg wird durch eine am vorderen Ende des Aufnahmekörpers angeordnete und mit diesem fest verbundene Deckscheibe gebildet, die in eine entsprechende Vertiefung an der Vorderseite des Grundkörpers eingesetzt wird. Dadurch können unterschiedliche Schrumpffutter besonders rational und kostengünstig hergestellt werden. Es sind lediglich unterschiedlich gestaltete Deckscheiben erforderlich um in Verbindung mit einheitlichen Aufnahmekörpern kostengünstige, individuell an den jeweiligen Anwendungsbereich angepasste Schrumpffutter zu ermöglichen. Die Deckscheiben können mit Auslassöffhungen unterschiedlichster Form an die unterschiedlichen Anforderungen, z.B. die Länge und den Durchmesser der Werkzeuge, angepasst werden. Durch eine unlösbare Verbindung des Aufnahmekörpers mit der Deckscheibe ist zudem eine dauerhafte Fixierung mit einer entsprechend geringen Ausfallwahrscheinlichkeit der Verbindung gegeben.

In einer besonders vorteilhaften Ausführungsform ist die Deckscheibe mit dem Aufnahmekörper verschweißt, wodurch sich eine beständige und gut abdichtende Verbindung ergibt.

Die Auslassöffnungen können durch Schlitze, Langlöcher, Bohrungen und dergleichen oder durch eine Kombination aus diesen gebildet sein. Hierdurch wird eine optimale Anpassung an die jeweiligen Anforderungen der Kühlmittelführung an das Werkzeug und/oder Werkstück ermöglicht.

Die Auslassöffhungen können zudem so gestaltet sein, dass sie den Austritt von Kühlmittel in verschiedenen Winkeln im Bezug auf das Schrumpffutter ermöglichen. Dies kann beispielsweise dadurch erreicht werden, dass die als Bohrungen ausgeführten Auslassöffnungen verschiedene Winkel im Bezug auf die Mittelachse des Schrumpffutters aufweisen. Hierdurch wird eine gezielte Strahlführung auf bestimmte Teile des Werkzeugs und/oder des Werkstücks ermöglicht.

Der oder die Kühlmittelzuführkanäle können als Bohrung innerhalb des Aufnahmekörpers oder auch als Längsnuten am Innenumfang der Aufnahmeöffnung ausgebildet sein.

In einer bevorzugten Ausführung sind die Auslassöffnungen gegenüber den Kühlmittelzuführkanälen in Umfangsrichtung des Aufnahmekörpers zum Teil oder vollständig gegeneinander versetzt. Dadurch kann eine optimale Stauwirkung innerhalb des Stau- und Sammelraums und eine gleichmäßigere Verteilung des Kühlmittels auf die Auslassöffnungen erreicht werden.

Weitere Besonderheiten und Vorzüge der Erfindung ergeben sich aus der folgenden Beschreibung bevorzugter Ausführungsbeispiele anhand der Zeichnung. Es zeigen:
- **Figur 1**: ein erstes Ausführungsbeispiel eines Schrumpffutters in einer Perspektive;
- **Figur 2**: das Schrumpffutter von Figur 1 in einem Längsschnitt;
- **Figur 3**: eine Deckscheibe des Schrumpffutters von Figur 1 in einer Vorderansicht;
- **Figur 4**: eine vergrößerte Detailansicht Y von Figur 2;
- **Figur 5**: einen Aufnahmekörper eines zweiten Ausführungsbeispiels eines Schrumpffutters in einem Längsschnitt;
- **Figur 6**: eine vergrößerte Detailansicht X von Figur 5;
- **Figur 7**: ein zweites Ausführungsbeispiel einer Deckscheibe in einer Vorderansicht und
- **Figur 8**: ein drittes Ausführungsbeispiel einer Deckscheibe in einer Vorderansicht und in Schnittansichten.

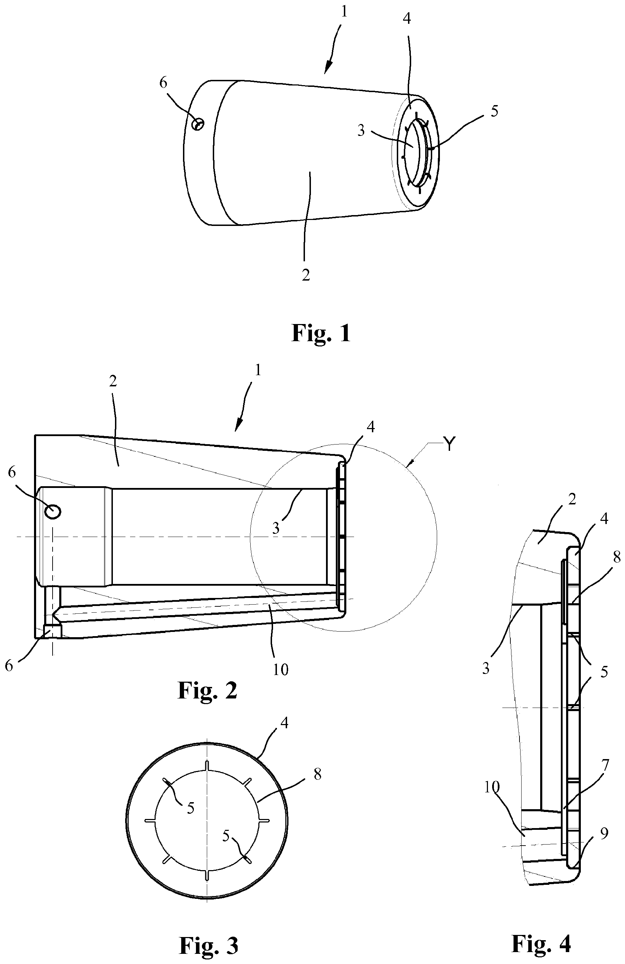

Figur 1 zeigt ein Schrumpffutter 1 mit einem Aufnahmekörper 2, der eine Aufnahmeöffnung 3 für einen Werkzeugschaft eines Werkzeugs enthält. An dem vorderen Ende des Aufnahmekörpers 2 ist eine mit dem Aufnahmekörper 2 unlösbar verbundene Deckscheibe 4 mit mehreren schlitzfömigen Auslassöffnungen 5 angeordnet. In dem Aufnahmekörper 2 sind ferner mehrere in Umfangsrichtung beabstandete radiale Bohrungen 6 für die Zuführung eines Kühlmittels vorgesehen.

Wie besonders aus den Figuren 2 und 4 hervorgeht, weist der Aufnahmekörper 2 im vorderen Bereich der Aufnahmeöffnung 3 einen als Ringnut ausgeführten Stau- und Sammelraum 7 auf. Die Deckscheibe 4 bildet einen nach innen ragenden Ringsteg 8, welcher den Stau- und Sammelraum 7 nach vorne und zum Werkzeugschaft hin begrenzt. Der Innendurchmesser des Ringstegs 8 entspricht dem Innendurchmesser der Aufnahmeöffnung 3, so dass zwischen dem Ringsteg 8 und dem Werkzeugschaft nach dem Einschrumpfen des Werkzeugs möglichst kein Ringspalt besteht.

Bei der gezeigten Ausführung ist die Deckscheibe 4 in eine Vertiefung 9 an der Vorderseite des Aufnahmekörpers 2 eingesetzt und z.B. durch Verschweißen unlösbar mit dem Aufnahmekörper 2 verbunden. Dadurch kann die Deckscheibe 2 die Verformung des Aufnahmekörpers 2 bei der zum Einschrumpfen des Werkzeugs in den Aufnahmekörpers 2 erforderlichen Erwärmung und Abkühlung entsprechend mitmachen und auch der Ringsteg 8 kann nach dem Einschrumpfen des Werkzeugs möglichst zur Anlage an dem Werkzeugschaft gelangen. Das dem Stau- und Sammelraum 7 zugeführte Kühlmittel soll über die schlitzförmigen Auslassöffhungen 5 und nicht über einen Ringspalt zwischen dem Ringsteg 8 und dem Werkzeugschaft austreten.

In Figur 2 ist erkennbar, dass innerhalb des Aufnahmekörpers 2 in Längsrichtung verlaufende Bohrungen als Kühlmittelzufuhrkanäle 10 angeordnet sind, die sich von den radialen Bohrungen 6 bis zum Stau- und Sammelraum 7 erstrecken. Über die Bohrungen 6 und die Kühlmittelzufuhrkanäle 10 kann ein Kühlmittel in den Stau- und Sammelraum 7 und von dort über die schlitzförmigen Auslassöffnungen 5 zu einem im Aufnahmekörper 2 gespannten Werkzeug geleitet werden.

Aus Figur 3 geht hervor, dass sich die Auslassöffnungen 5 in Form längerer und schmaler Schlitze in dem durch die Deckscheibe 4 gebildeten Ringsteg 8 von dessen Innenumfang in radialer Richtung sternförmig nach außen erstrecken. Durch die Ausführung der Auslassöffnungen 5 als lange und schmale Schlitze kann ein hoher Spritzwinkel auf den Schneidbereich des Werkzeugs ermöglicht und eine hohe Strömungsgeschwindigkeit erreicht werden. Dies ermöglicht eine zuverlässige und zielgerichtete Kühlung.

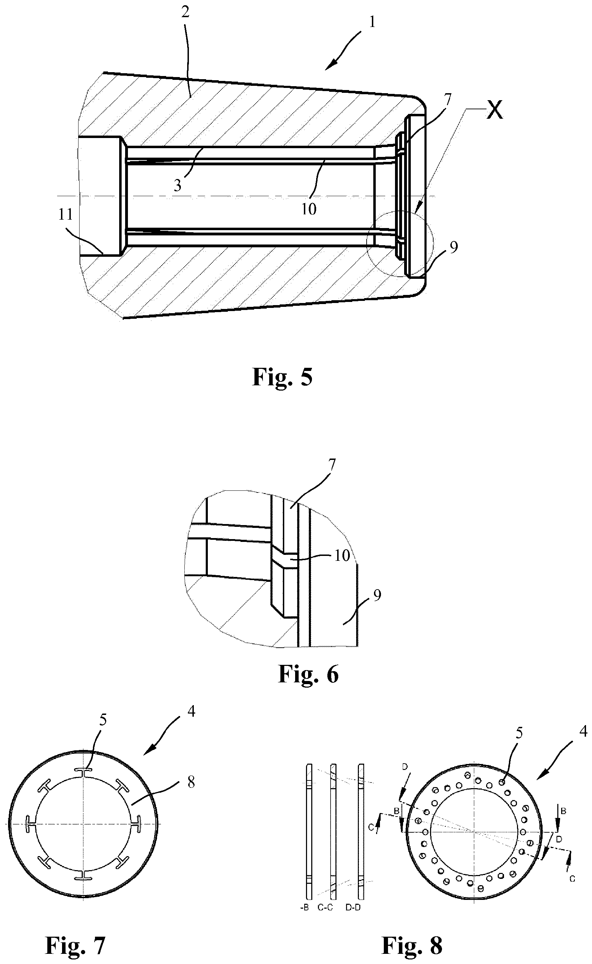

In Figur 5 ist ein Aufnahmekörper 2 eines weiteren Ausführungsbeispiels eines erfindungsgemäßen Schrumpffutters gezeigt. Im Unterschied zu der vorhergehenden Ausführungsform sind die Kühlmittelzuführkanäle 10 als Längsnuten am Innenumfang der Aufnahmeöffnung 3 ausgebildet. Die als Längsnuten ausgeführten Kühlmittelzuführkanäle 10 verlaufen von einem hinteren erweiterten Bereich 11 der Aufnahmeöffnung 3 zum Stau- und Sammelraum 7. Das Kühlmittel wird auch hier durch die Kühlmittelzuführkanäle 10 zu dem Stau- und Sammelraum 7 geführt.

Aus Figur 6 geht hervor, dass auch dort an der Vorderseite des Aufnahmekörpers 2 eine Vertiefung 9 zur Aufnahme einer Deckscheibe 4 vorgesehen ist. Der Stau- und Sammelraum 7 kann mehrere Stufen mit unterschiedlichen Durchmessern aufweisen, um eine optimale Stau- und Sammelwirkung und damit eine gleichmäßige Verteilung des Kühlmittelstroms auf die Auslassöffnungen 5 zu erreichen. In der gezeigten Ausführung setzten sich die als Längsnuten ausgebildeten Kühlmittelzuführkanäle 10 zu einem Teil auch in den Stau- und Sammelraum 7 fort, wodurch ebenfalls eine günstige Verteilung des Kühlmittelstroms erreicht wird.

Die Figuren 7 und 8 zeigen weitere Ausführungsformen von Deckscheiben 4 mit Auslassöffnungen 5 unterschiedlicher Form. In Figur 7 sind T-förmige Schlitze gezeigt, welche sich von dem Innenumfang radial nach außen erstrecken. Figur 8 zeigt mehrere in Kreismustern angeordnete Bohrungen, welche unterschiedliche Winkel bezüglich der Mittelachse der Deckscheibe 4 aufweisen. Dadurch können verschiedene Bereiche des Werkzeugs gezielt gekühlt werden. Es ist offensichtlich, dass durch die Form, Anzahl, Abmessung und Orientierung der Auslassöffnungen die Kühlmittelzuführung zum Werkzeug an eine Vielzahl von Anforderungen individuell angepasst werden kann.

Die Erfindung ist nicht auf die vorstehend beschriebenen und in der Zeichnung dargestellten Ausführungsbeispiele der Deckscheiben beschränkt. So können z.B. die durch eine Variation der Form, Anzahl, Abmessung, und Orientierung der Auslassöffhungen sowie deren Lage auf der Scheibe die Kühlmittelzuführung zum Werkzeug optimiert werden.

## Patentansprüche

1. Schrumpffutter (1) mit einem Aufnahmekörper (2), einer im Aufnahmekörper (2) angeordneten Aufnahmeöffnung (3) für einen Werkzeugschaft, einem im vorderen Bereich der Aufnahmeöffnung (3) angeordneten Stau- und Sammelraum (7) und mindestens einem zu dem Stau- und Sammelraum (7) führenden Kühlmittelzufuhrkanal (10), wobei der Stau- und Sammelraum (7) durch einen am vorderen Ende der Aufnahmeöffnung (3) angeordneten Ringsteg (8) nach vorne begrenzt wird, der Innendurchmesser des Ringstegs (8) dem Innendurchmesser der Aufnahmeöffnung (3) entspricht und im Ringsteg (8) mehrere Auslassöffnungen (5) für den Austritt eines über den Kühlmittelzufuhrkanal (10) in den Stau- und Sammelraum (7) geleiteten Kühlmittels nach außen vorgesehen sind, **dadurch gekennzeichnet, dass** der Ringsteg (8) durch eine in eine Vertiefung (9) am vorderen Ende des Aufnahmekörpers (2) eingesetzte Deckscheibe (4) gebildet wird.

2. Schrumpffutter nach Anspruch 1, **dadurch gekennzeichnet, dass** die Deckscheibe (4) fest mit dem Aufnahmekörper (2) verbunden ist.

3. Schrumpffutter nach Anspruch 1 oder 2, **dadurch gekennzeichnet, dass** die Deckscheibe (4) mit dem Aufnahmekörper (2) verschweißt ist.

4. Schrumpffutter nach einem der Ansprüche 1 bis 3, **dadurch gekennzeichnet, dass** die die Auslassöffnungen (5) als schmale Schlitze und/oder Langlöcher und/oder Bohrungen ausgebildet sind.

5. Schrumpffutter nach einem der Ansprüche 1 bis 4, **dadurch gekennzeichnet, dass** die die Auslassöffhungen (5) aus mehreren Reihen von Bohrungen gebildet sind.

6. Schrumpffutter nach Anspruch 4 oder 5, **dadurch gekennzeichnet, dass** die die als Bohrungen ausgebildeten Auslassöffhungen (5) verschiedene Winkel bezüglich der Mittelachse des Schrumpffutters aufweisen.

7. Schrumpffutter nach einem der Ansprüche 1 bis 6, **dadurch gekennzeichnet, dass** die Kühlmittelzufuhrkanäle (10) als Bohrungen innerhalb des Aufnahmekörpers (2) ausgebildet sind.

8. Schrumpffutter nach einem der Ansprüche 1 bis 6, **dadurch gekennzeichnet, dass** die Kühlmittelzufuhrkanäle (10) als Längsnuten am Innenumfang der Aufnahmeöffnung (3) ausgebildet sind.

9. Schrumpffutter nach einem oder mehreren der vorhergehenden Ansprüche, **dadurch gekennzeichnet, dass** der Kühlmittelzuführkanal (10) und die Auslassöffnungen (5) in Umfangsrichtung des Aufnahmekörpers (2) zum Teil oder vollständig zueinander versetzt sind.

## Claims

1. Shrink fit chuck (1) having a receiving body (2), a receiving opening (3), arranged in the receiving body (2), for a tool shank, a storage and collecting space (7) arranged in the front region of the receiving opening (3), and at least one coolant feed duct (10) leading to the storage and collecting space (7), wherein the storage and collecting space (7) is bounded toward the front by an annular web (8) arranged at the front end of the receiving opening (3), the inside diameter of the annular web (8) corresponds to the inside diameter of the receiving opening (3), and a plurality of outlet openings (5) for a coolant passed into the storage and collecting space (7) via the coolant feed duct (10) to pass out of toward the outside are provided in the annular web (8), **characterized in that** the annular web (8) is formed by a cover disc (4) inserted into a recess (9) at the front end of the receiving body (2).

2. Shrink fit chuck according to Claim 1, **characterized in that** the cover disc (4) is firmly connected to the receiving body (2).

3. Shrink fit chuck according to Claim 1 or 2, **characterized in that** the cover disc (4) has been welded to the receiving body (2).

4. Shrink fit chuck according to one of Claims 1 to 3, **characterized in that** the outlet openings (5) are in the form of narrow slits and/or slots and/or bores.

5. Shrink fit chuck according to one of Claims 1 to 4, **characterized in that** the outlet openings (5) are formed by several rows of bores.

6. Shrink fit chuck according to Claim 4 or 5, **characterized in that** the outlet openings (5) in the form of bores exhibit different angles with respect to the central axis of the shrink fit chuck.

7. Shrink fit chuck according to one of Claims 1 to 6, **characterized in that** the coolant feed ducts (10) are in the form of bores within the receiving body (2) .

8. Shrink fit chuck according to one of Claims 1 to 6, **characterized in that** the coolant feed ducts (10) are in the form of longitudinal grooves in the inner circumference of the receiving opening (3).

9. Shrink fit chuck according to one or more of the preceding claims, **characterized in that** the coolant feed duct (10) and the outlet openings (5) are partially or fully offset with respect to one another in the circumferential direction of the receiving body (2).

## Revendications

1. Mandrin de frettage (1) comprenant un corps de logement (2), un orifice de logement (3) disposé dans le corps de logement (2) et destiné à une tige d'outil, un espace de retenue et de collecte (7) disposé dans la zone avant de l'orifice de logement (3), et au moins un canal d'amenée d'agent de refroidissement (10) menant à l'espace de retenue et de collecte (7), dans lequel l'espace de retenue et de collecte (7) est délimité vers l'avant par une nervure annulaire (8) disposée à l'extrémité avant de l'orifice de logement (3), le diamètre intérieur de la nervure annulaire (8) correspond au diamètre intérieur de l'orifice de logement (3), et dans la nervure annulaire (8), plusieurs orifices de sortie (5) sont prévus pour la sortie vers l'extérieur d'un agent de refroidissement guidé par le canal d'amenée d'agent de refroidissement (10) dans l'espace de retenue et de collecte (7), **caractérisé en ce que** la nervure annulaire (8) est formée par un disque de recouvrement (4) inséré dans un creux (9) à l'extrémité avant du corps de logement (2).

2. Mandrin de frettage selon la revendication 1, **caractérisé en ce que** le disque de recouvrement (4) est relié solidement au corps de logement (2).

3. Mandrin de frettage selon la revendication 1 ou 2, **caractérisé en ce que** le disque de recouvrement (4) est soudé au corps de logement (2).

4. Mandrin de frettage selon l'une quelconque des revendications 1 à 3, **caractérisé en ce que** les orifices de sortie (5) sont réalisés sous forme de fentes étroites et/ou de trous oblongs et/ou d'alésages.

5. Mandrin de frettage selon l'une quelconque des revendications 1 à 4, **caractérisé en ce que** les orifices de sortie (5) sont formés par plusieurs rangées d'alésages.

6. Mandrin de frettage selon la revendication 4 ou 5, **caractérisé en ce que** les orifices de sortie (5) réalisés sous forme d'alésages présentent différents angles par rapport à l'axe central du mandrin de frettage.

7. Mandrin de frettage selon l'une quelconque des revendications 1 à 6, **caractérisé en ce que** les canaux d'amenée d'agent de refroidissement (10) sont réalisés sous forme d'alésages à l'intérieur du corps de logement (2) .

8. Mandrin de frettage selon l'une quelconque des revendications 1 à 6, **caractérisé en ce que** les canaux d'amenée d'agent de refroidissement (10) sont réalisés sous forme de rainures longitudinales sur la circonférence intérieure de l'orifice de logement (3).

9. Mandrin de frettage selon une ou plusieurs des revendications précédentes, **caractérisé en ce que** le canal d'amenée d'agent de refroidissement (10) et les orifices de sortie (5) sont décalés en partie ou complètement les uns par rapport aux autres dans la direction circonférentielle du corps de logement (2).
